# EUROPEAN PATENT APPLICATION

(11) **EP 1 783 191 A1**
(43) Date of publication of application: **09.05.2007**
(21) Application number: 06018793.7
(22) Date of filing: 07.09.2006
(51) Int. Cl.: C09K 11/64, C09K 11/54, H05B 33/14

(54) **Long-afterglow electroluminescent lamp**

(30) Priority: 03.11.2005 US 163925
(71) Applicant: OSRAM-SYLVANIA INC., Danvers, MA 01923 (US)
(72) Inventor: Fan, Chen-Wen, Sayre PA 18840 (US); Schwab, Frank, Towanda PA 18848 (US); Sheppeck, David C., Sayre PA 18840 (US)
(74) Representative: Grünecker, Kinkeldey, Stockmair & Schwanhäusser Anwaltssozietät

(57) **Abstract**

A long-afterglow phosphor is added to an electroluminescent lamp in order to continue to provide illumination after the electrical power has been removed from the lamp. When the electroluminescent lamp is powered, it emits light caused the stimulation of an electroluminescent phosphor in the electric field. The emitted light further stimulates a long-afterglow phosphor so that when the lamp is turned off, and the electroluminescent phosphor ceases to emit light, the afterglow phosphor continues to provide a visible illumination at a lower intensity for many additional minutes or hours.

## Description

### TECHNICAL FIELD

This invention relates to electroluminescent lamps and phosphors associated therewith. More particularly, this invention relates to means for continuing to provide illumination after power has been removed from an electroluminescent lamp.

### BACKGROUND OF THE INVENTION

Electroluminescent (EL) lamps may be divided generally into two types: (1) thin-film EL lamps that are made by depositing alternating films of a phosphor and dielectric material on a rigid glass substrate usually by a vapor deposition technique such as CVD or sputtering; and (2) thick-film EL lamps which are made with particulate materials that are dispersed in resins and coated in alternating layers on sheets of plastic. In the latter case, the thick-film electroluminescent lamps may be constructed as thin, flexible lighting devices thereby making them suitable for a greater range of applications.

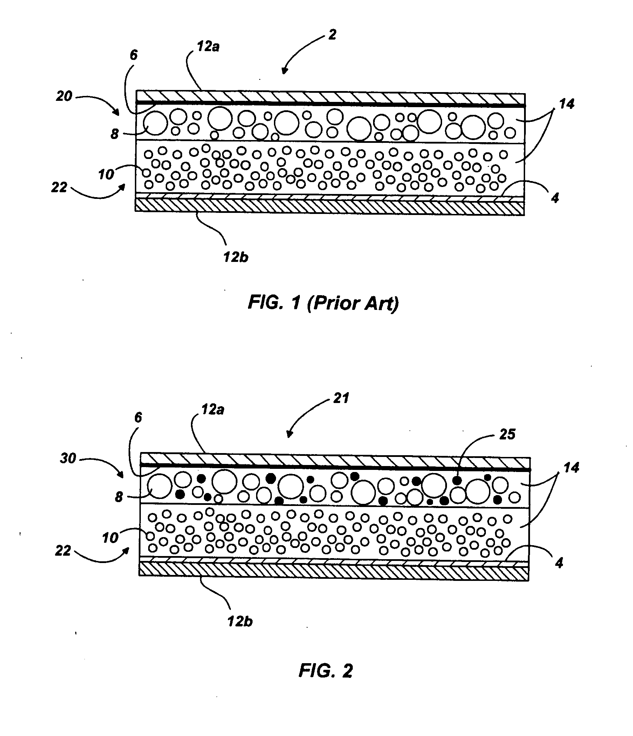

A cross-sectional illustration of a conventional thick-film EL lamp is shown in Fig. 1. The lamp 2 has two dielectric layers 20 and 22. A first conductive material 4, such as graphite, coated on a plastic film 1 2b forms a first electrode of the lamp 2 (this electrode could also comprise a metal foil); while a thin layer of a transparent conductive material 6, such as indium tin oxide, coated on a second plastic film 1 2a forms a second electrode. Sandwiched between the two conductive electrodes 4 and 6 are two layers 20 and 22 of dielectric material 14 which may be, for example, cyanoethyl cellulose, cyanoethyl starch, poly-(methylmethacrylate/ethyl acrylate) and/or a fluorocarbon polymer. Adjacent to the first electrode 4 is a layer of dielectric material 14 in which are embedded particles of a ferroelectric material 10, preferably barium titanate. Adjacent to the second electrode 6 is a layer of dielectric material 14 in which are embedded particles of an electroluminescent phosphor 8. The phosphors available for thick-film EL lamps are primarily comprised of zinc sulfide that has been doped with various activators, e.g., Cu, Au, Ag, Mn, Br, I, and Cl. Examples of these phosphors are described in U.S. Patent Nos. 5,009,808, 5,702,643, 6,090,31 1, and 5,643,496. Preferred EL phosphors include ZnS:Cu phosphors which may be co-doped with Cl and/or Mn. Typically, the individual particles of the EL phosphors are encapsulated with an inorganic coating in order improve their resistance to moisture-induced degradation. Examples of such coatings are described in U.S. Patent Nos. 5,220,243, 5,244,750, 6,309,700, and 6,064,150.

When an alternating voltage is applied to the electrodes, visible light is emitted from the phosphor. EL phosphors have rise and fall times on the order of milliseconds to seconds. When the lamp is turned off, the light intensity of the lamp rapidly falls to zero. This can be a disadvantage if the EL lamp is used to backlight safety signs, exit signs, or watch dials. If power is lost to the EL lamp in an emergency or when conserving battery power, no light is emitted.

Long-afterglow phosphors (also called long-persistence or long-decay phosphors) belong to a special class of phosphors wherein the excited states of the phosphors exhibit long decay times (or phosphorescence) on the order of tens of minutes or even hours. Long-afterglow phosphors may excited by near-ultraviolet and visible wavelengths of light. Depending on the long-afterglow phosphor used, light emissions visible to the human eye can continue for many minutes or hours after the excitation source has been removed. Examples of long-afterglow phosphors include aluminate phosphors represented by the formula MO · x(Al₂O₃):RE, where M is an alkaline earth metal, e.g., Ca, Sr, or Ba, and RE is typically a rare-earth activator, e.g., one of the lanthanide elements (atomic nos. 57-71). Of particular interest are the strontium aluminates, SrAl₂O₄:Eu,Dy and Sr₄Al₄O₂₅:Eu,Dy. Other long-afterglow phosphors include various silicate, phosphate and oxysulfide phosphors which are disclosed, for example, in U.S. Patent Nos. 6,284,156, 6,099,654, and 6,379,584, respectively.

Long-afterglow phosphors have been incorporated into sheets, shapes or coatings and are currently used in safety signs, exit signs, egress lighting strips, watch dials, and many other low-light-intensity applications. Articles incorporating long-afterglow phosphors must be exposed to an external light source for a sufficient length of time in order to store up energy to be released later. Without an external light source, the energy stored in the long-afterglow phosphor will be fully depleted and no more light will be emitted.

It is well documented that the lower limit of the light perception of a dark-adapted human eye is 0.0032 mcd/m². The standard accepted by the safety markings industry is several hundred times higher than this value. According to the ASTM E2072-04, the photopic luminance of escape routes, emergency equipment, and obstructions along the escape route of the photoluminescent marking shall be not less than 20.0 mcd/m² at 10 minutes after activation has ceased and 2.8 mcd/m² at 60 minutes after activation has ceased.

Long-afterglow phosphors can also be incorporated into the design of an incandescent or fluorescent lamp as disclosed in U.S. Pat. Nos. 5,859,496, 6,479,936, and 6,617,781. These lamp structures are thick and rigid and cannot be bent or curved even slightly without irreversible damage to the lamp.

### SUMMARY OF THE INVENTION

The present invention combines the advantages of thin, flexible EL lamps with the advantages of long-afterglow phosphors. The result is that the EL lamp will continue to provide a useable level of illumination after power to the lamp has been turned off. This is particularly useful for safety lighting and display applications. With regard to the latter, electroluminescent lamps have been used to illuminate the keypads of battery-dependent devices like mobile phones. In order to conserve power in these devices, the EL lamp is typically only lit for a limited period of time after which it is automatically turned off. This can be an annoyance to the user who while in the dark must again activate the lamp, for example, by pressing a key before being able to dial a number. The present invention would allow the keypad to remain sufficiently visible to the user for an extended period of time after the EL lamp has been turned off to conserve power. Thus, it would be possible to conserve battery power while still allowing the user to see the keys in the dark.

Preferably, the long-afterglow phosphors used in this invention have a decay time to 10% of their initial brightness that is greater than one minute. More preferably, the long-afterglow phosphor has a decay time to 5% of its initial brightness that is greater than 60 minutes. Preferably, the long-afterglow electroluminescent lamp of this invention provides a visible illumination of greater than about 3 mcd/m² for at least about 10 minutes after the power is turned off. More preferably, the long-afterglow EL lamp provides a visible illumination of greater than about 0.5 mcd/m² for at least 60 minutes after the power has been turned off.

In one embodiment, the electroluminescent lamp of the present invention may be made by mixing at least one electroluminescent phosphor together with at least one long-afterglow phosphor in a binder and then coating this phosphor mixture on a substrate in a conventional manner by screen-printing, draw blade coating, or roll-to-roll printing. The other layers of the EL lamp are coated normally to complete the EL lamp.

In another embodiment, the EL lamp is prepared in a conventional manner and a layer containing a long-afterglow phosphor is applied to an exterior surface of the lamp, on the light-emitting side. This may be accomplished by either by coating directly on the EL lamp or by preparing a separate coated overlay which is then affixed adjacent to the light-emitting side of the lamp. The overlay may be either directly affixed to the light-emitting side of the EL lamp by an adhesive, plastic laminating technique, or other similar means. The overlay also may be mounted to a structure that is adjacent to the light-emitting side of the EL lamp. The overlay may also be comprised of a transparent film that has been impregnated with the long-afterglow phosphor, such as a sheet of plastic material that has been formed with the long-afterglow phosphor used as a filler in the plastic. It is to be noted that the term "transparent" as used herein requires only that some light is transmitted by a material and therefore "transparent" as used herein would include materials that are translucent. It is not intended that the term "transparent" only apply to materials that are clear or see-through.

### BRIEF DESCRIPTION OF THE DRAWINGS

FIG. 1 is a sectional view of a conventional thick-film electroluminescent lamp.

FIG. 2 is a sectional view of a long-afterglow electroluminescent lamp according to an embodiment the present invention wherein the long-afterglow phosphor is mixed with the electroluminescent phosphor.

FIG. 3 is a sectional view of a long-afterglow electroluminescent lamp according to another embodiment of the present invention wherein the long-afterglow phosphor is coated on the surface of the lamp.

FIG. 4 is a sectional view of a long-afterglow electroluminescent lamp according to a further embodiment of the present invention wherein the long-afterglow phosphor is applied as an overlay to the lamp.

### DETAILED DESCRIPTION OF THE INVENTION

For a better understanding of the present invention, together with other and further objects, advantages and capabilities thereof, reference is made to the following disclosure and appended claims taken in conjunction with the above-described drawings.

The long-afterglow electroluminescent lamps of the present invention are based on a thick-film EL lamp structure. In a preferred embodiment, the electroluminescent phosphor layer contains a blend of electroluminescent phosphor particles and particles of a long-afterglow phosphor. A lamp according to this embodiment is illustrated in cross section in Fig. 2. A long-afterglow phosphor 25 is mixed with the EL phosphor 8 and then formed into the layer 30 in the EL lamp 21. The EL phosphor 8 is excited by the electrical energy from an external power supply (not shown). At the same time, the long-afterglow phosphor 25 is excited by a portion of the light emitted by the EL phosphor 8. The light from both the EL phosphor and the long-afterglow phosphor are transmitted through the transparent electrode 6 and the plastic film 1 2a that constitute the light-emitting side of the lamp.

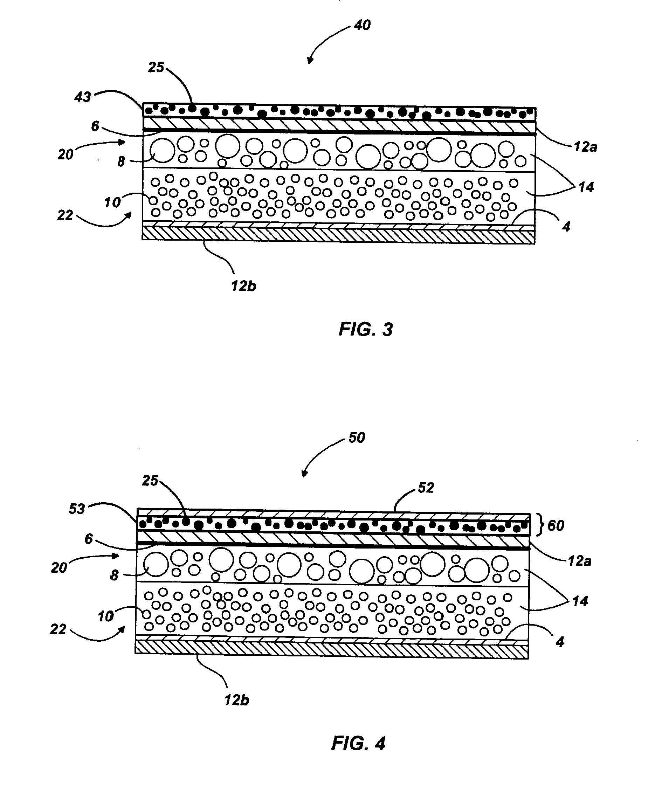

In an alternate embodiment illustrated in Fig. 3, it is possible to apply a long-afterglow phosphor as a layer (or multiple layers) to the surface of an electroluminescent lamp. Here, the EL lamp 40 is of a conventional thick-film construction except that the long-afterglow phosphor 25 is coated in a layer 43 on the light-emitting side of the lamp. The afterglow phosphor can be applied in a solid or patterned layer using the same equipment that is used to fabricate the EL lamp.

In another alternate embodiment illustrated in Fig. 4, the long-afterglow phosphor 25 is applied as a layer (or multiple layers) 53 to a separate transparent film 52 to form an overlay 60. The long-afterglow phosphor can be applied in a solid or patterned layer using the same equipment that is used to fabricate the EL lamp. After fabrication, the long-afterglow overlay 60 is affixed to the light-emitting side of the EL lamp 50, preferably with the transparent film 52 facing outward in order to protect the long-afterglow layer 53. The advantage of a separate overlay is that the long-afterglow feature can be added retroactively to electroluminescent lamps that did not have this feature originally.

The preferred method for applying the layers to the electroluminescent lamp and for applying the layers of long-afterglow phosphor to transparent films is screen printing, also referred to as "silk-screening." However, other coating techniques such as draw blade coating and roll-to-roll coating may also be used.

The present invention will be described in further detail with reference to the following examples. However, it should be understood that the present invention is not restricted to such specific examples.

In the examples given below, the electroluminescent lamps are constructed in the following general manner. Electroluminescent phosphors are mixed with a binder (DuPont Microcircuit Materials Luxprint^{®} 8155 Electroluminescent Medium). The electroluminescent phosphors were blue, blue-green, green and white-emitting ZnS-based EL phosphors. In particular, OSRAM SYLVANIA GlacierGLO^{®} types GG25 (blue-green), GG45 (green), GG64 (blue), and GG73 (white) encapsulated phosphors were used. The percentage of phosphor in the liquid binder is 60 weight percent (wt.%). The phosphor suspension is screen-printed onto a 0.0065-0.0075 in.-thick PET film having a transparent, conductive layer of indium-tin oxide (e.g., OC-200 from CP Films). The polyester screen has 137 or 140 threads per inch. After drying, a barium titanate-filled dielectric layer (DuPont Microcircuit Materials Luxprint^{®} 81 53 Electroluminescent Dielectric Insulator) is applied over the phosphor layer in the same way. After drying, a second dielectric layer is applied in the same way and dried. Finally a rear carbon electrode (DuPont Microcircuit Materials Luxprint^{®} 7144 Carbon Conductor) is applied over the dielectric layer and dried. The long-afterglow phosphors used in the examples were Nemoto & Co. LumiNova^{®} types G-300 (green-emitting SrAl₂O₄:Eu,Dy) and BG-300 (blue-emitting Sr₄Al₁₄O₂₅:Eu,Dy) phosphors.

Example 1

An electroluminescent lamp was constructed as described previously with the following exception. The phosphor used in this lamp was a mixture of 87 wt.% type GG25 electroluminescent phosphor and 13 wt.% type G-300M long-afterglow phosphor. This mixture was achieved by dry blending the two powders. A percentage of 60 wt.% mixed phosphor was then combined with the binder to make the phosphor suspension.

Example 2

An electroluminescent lamp was constructed as described in Example 1 except that the phosphor mixture used in this lamp was 77 wt.% type GG25 electroluminescent phosphor and 23 wt.% type G-300M long-afterglow phosphor.

Example 3

An electroluminescent lamp was constructed as described in Example 1 except that the phosphor used in this lamp was a mixture of 87 wt.% type GG45 electroluminescent phosphor and 13 wt.% type G-300M long-afterglow phosphor. A percentage of 60 wt.% mixed phosphor was then combined with the binder to make the phosphor suspension.

Example 4

An electroluminescent lamp was constructed as described in Example 1 except that the mixture used in this lamp was 77 wt.% type GG45 electroluminescent phosphor and 23 wt.% type G-300M long-afterglow phosphor.

Example 5

An electroluminescent lamp was constructed as described in Example 1 except that the phosphor used in this lamp was a mixture of 87 wt.% type GG64 electroluminescent phosphor and 13 wt.% type BG-300M long-afterglow phosphor.

Example 6

An electroluminescent lamp was constructed as described in Example 1 except that the mixture used in this lamp was 77 wt.% type GG64 electroluminescent phosphor and 23 wt.% type BG-300M long-afterglow phosphor.

Example 7

An electroluminescent lamp was constructed as described in Example 1 except that the phosphor used in this lamp was a mixture of 87 wt.% type GG73 electroluminescent phosphor and 13 wt.% type BG-300M long-afterglow phosphor.

Example 8

An electroluminescent lamp was constructed as described in Example 1 except that the mixture used in this lamp was 77 wt.% type GG73 electroluminescent phosphor and 23 wt.% type BG-300M long-afterglow phosphor.

The lamps from Examples 1 - 8 and comparative control lamps without long-afterglow phosphor were each connected to a power supply operating at 1 25 V and 800 Hz. The lamps were operated in a dark room at temperatures between 72-78°F for 1 5 minutes, and then the power was removed. The light emitted by the lamps after the power was removed was read with a photometer. Table 1 gives the brightness (Bright.) of each lamp in millicandela per square meter (mcd/m²) at increasing time intervals measured from the time the power was turned off.

**TABLE 1 - Lamp brightness (mcd/m²) after power was removed**

| Lamp | EL Phosphor | Long-Afterglow Phosphor | Bright. ½ min | Bright. 5 min | Bright. 20 min | Bright. 60 min |
|---|---|---|---|---|---|---|
| Control A | GG25 | none | 0.379 | 0 | 0 | 0 |
| Example 1 | GG25 | G-300M | 60.44 | 7.78 | 2.13 | 0.66 |
| Example 2 | GG25 | G-300M | 118.36 | 12.31 | 4.25 | 1.82 |
| Control B | GG45 | none | 0 | 0 | 0 | 0 |
| Example 3 | GG45 | G-300M | 41.79 | 6.19 | 1.72 | 0.43 |
| Example 4 | GG45 | G-300M | 56.23 | 7.97 | 3.77 | 1.96 |
| Control C | GG64 | none | 0.984 | 0 | 0 | 0 |
| Example 5 | GG64 | BG-300M | 64.15 | 11.60 | 2.76 | 1.04 |
| Example 6 | GG64 | BG-300M | 114.20 | 17.98 | 4.27 | 1.37 |
| Control D | GG73 | none | 4.72 | 0 | 0 | 0 |
| Example 7 | GG73 | BG-300M | 39.87 | 10.84 | 3.47 | 1.95 |
| Example 8 | GG73 | BG-300M | 62.65 | 19.23 | 5.71 | 2.41 |

Example 9

An electroluminescent lamp was constructed with type GG25 EL phosphor. (Control Lamp A). The percentage of EL phosphor in the liquid binder was 60 wt.%. Separately, type G-300M long-afterglow phosphor was combined with the binder (DuPont Luxprint^{®} 8155) to make a suspension. The percentage of the long-afterglow phosphor in the liquid binder was 60 wt.%. The suspension of the long-afterglow phosphor was coated on another piece of PET film. After drying, the phosphor coverage on the overlay was 0.0168 g/cm². The overlay with the long-afterglow phosphor was affixed with tape to the light-emitting side of the electroluminescent lamp.

Example 10

The electroluminescent lamp in this example was the same one as in Example 9 (without the overlay). A new overlay was created in the same manner except that after drying, a second layer of the long-afterglow suspension was coated over the first layer. After drying, a third layer of long-afterglow suspension was coated over the previous two layers in the same way. The total phosphor coverage on the overlay was 0.0480 g/cm². The overlay with the afterglow phosphor was then affixed to the light-emitting side of the electroluminescent lamp.

Example 11

An electroluminescent lamp was constructed with type GG73 EL phosphor. (Control Lamp D). An overlay comprised of type BG-300M long-afterglow phosphor on a PET film (0.0168 g/cm²) was affixed to the light-emitting side of the electroluminescent lamp.

Example 12

The electroluminescent lamp in this example was the same one as in Example 11 (without the overlay). Three layers of the long-afterglow phosphor were applied to make a new overlay yielding a total phosphor coverage of 0.0494 g/cm². This overlay with the afterglow phosphor was then affixed to the light-emitting side of the electroluminescent lamp.

The lamps from Examples 9, 10, 11 and 12 were each connected to a power supply operating at 125 V and 800 Hz. The lamps were operated in a dark room at temperatures between 72-78 °F for 1 5 minutes, and then the power was removed. The brightness of Examples 9-12 were read with a photometer. The brightness in millicandela per square meter (mcd/m²) corresponding to time in minutes after the power was removed are shown in Table 2.

**TABLE 2 - Lamp brightness (mcd/m²) after power was removed**

| Lamp | EL Phosphor | Overlay Screen Phosphor | Bright. ½ min | Bright. 5 min | Bright. 20 min | Bright. 60 min |
|---|---|---|---|---|---|---|
| Example 9 | GG25 | G-300M, 1 layer | 1101.9 | 122.0 | 27.0 | 12.0 |
| Example 10 | GG25 | G-300M, 3 layers | 1598.7 | 191.7 | 79.0 | 23.8 |
| Example 11 | GG73 | BG-300M, 1 layer | 663.4 | 208.6 | 55.7 | 21.8 |
| Example 12 | GG73 | BG-300M, 3 layers | 722.8 | 375.7 | 138.3 | 45.7 |

Example 13

An electroluminescent lamp was constructed with type GG45 EL phosphor. (Control Lamp B). The overlay film from Example 9 was affixed to the light-emitting side of the electroluminescent lamp.

Example 14

The electroluminescent lamp in this example was the same one as in Example 13 (without the overlay). The overlay film from Example 10 was affixed to the light-emitting side of the electroluminescent lamp.

Example 1 5

An electroluminescent lamp was constructed with type GG64 EL phosphor. (Control Lamp C). The overlay film from Example 11 was affixed to the light-emitting side of the electroluminescent lamp.

Example 16

The electroluminescent lamp in this example was the same one as in Example 15 (without the overlay). The overlay film with type BG-300M long-afterglow phosphor from Example 12 was affixed to the light-emitting side of the electroluminescent lamp.

The lamps and overlays from Examples 13, 14, 1 5 and 16 were each connected to a power supply operating at 125 V and 800 Hz. The lamps were operated in a dark room at temperatures between 72-78°F for 15 minutes, and then the power was removed. The brightness of Examples 13 - 16 were read with a photometer. The brightness in millicandela per square meter (mcd/m²) corresponding to time in minutes after the power was removed are shown in Table 3.

**TABLE 3 - Brightness (mcd/m²) after power was removed**

| Lamp | EL Phosphor | Overlay Screen Phosphor | Bright. ½ min | Bright. 5 min | Bright. 20 min | Bright. 60 min |
|---|---|---|---|---|---|---|
| Example 13 | GG45 | G-300M, 1 layer | 685.8 | 111.4 | 29.4 | 9.5 |
| Example 14 | GG45 | G-300M, 3 layers | 822.8 | 184.2 | 65.1 | 20.4 |
| Example 15 | GG64 | BG-300M, 1 layer | 1382.4 | 160.3 | 31.3 | 11.7 |
| Example 16 | GG64 | BG-300M, 3 layers | 2421.2 | 402.9 | 113.0 | 32.4 |

While there has been shown and described what are at the present considered the preferred embodiments of the invention, it will be obvious to those skilled in the art that various changes and modifications may be made therein without departing from the scope of the invention as defined by the appended claims.

## Claims

1. An electroluminescent lamp comprising a first electrode, a second electrode, a dielectric material, and a phosphor layer having an electroluminescent phosphor and a long-afterglow phosphor.

2. The lamp of claim 1 wherein the long-afterglow phosphor is a strontium aluminate phosphor.

3. The lamp of claim 2 wherein the long-afterglow phosphor is SrAl₂O₄:Eu,Dy or Sr₄Al₁₄O₂₅:Eu,Dy.

4. The lamp of claim 1 wherein the long-afterglow phosphor has a decay time to 10% of its initial brightness of greater than 1 minute.

5. The lamp of claim 1 wherein the long-afterglow phosphor has a decay time to 5% of its initial brightness of greater than 60 minutes.

6. The lamp of claim 1 wherein the lamp provides a visible illumination of at least about 3 mcd/m² for at least about 10 minutes after power to the lamp has been turned off.

7. The lamp of claim 1 wherein the lamp provides a visible illumination of at least about 0.5 mcd/m² for at least about 60 minutes after power to the lamp has been turned off.

8. A phosphor blend for an electroluminescent lamp comprising an electroluminescent phosphor and a long-afterglow phosphor.

9. The phosphor blend of claim 8 wherein the electroluminescent phosphor comprises ZnS:Cu and the long-afterglow phosphor is an aluminate phosphor.

10. The phosphor blend of claim 9 wherein the aluminate phosphor is represented by a formula MO·x(Al₂O₃):RE, where M is an alkaline earth metal and RE is at least one lanthanide element.

11. The phosphor blend of claim 9 wherein the aluminate phosphor is SrAl₂O₄:Eu,Dy or Sr₄Al₁₄O₂₅:Eu,Dy.

12. A long-afterglow electroluminescent lamp comprising a first electrode, a second electrode, a dielectric layer, and a phosphor layer, at least the first electrode being transparent to light emitted from the phosphor layer, the phosphor and dielectric layers being disposed between the electrodes;
the phosphor layer being adjacent to the first electrode and comprising a blend of an electroluminescent phosphor and a long-afterglow phosphor that is dispersed in a first dielectric material;
the dielectric layer being positioned adjacent to the second electrode and comprising a ferroelectric material dispersed in a second dielectric material.

13. The lamp of claim 12 wherein the first and second dielectric materials are the same.

14. The lamp of claim 12 wherein the electroluminescent phosphor is comprised of ZnS:Cu and the long-afterglow phosphor is an aluminate phosphor.

15. The lamp of claim 14 wherein the aluminate phosphor is SrAl₂O₄:Eu,Dy or Sr₄Al₁₄O₂₅:Eu,Dy.

16. An electroluminescent lamp comprising an overlay, a front transparent electrode, a rear electrode, a dielectric material, and a phosphor layer having an electroluminescent phosphor, the overlay having a long-afterglow phosphor and being positioned adjacent to the front transparent electrode.

17. The lamp of claim 16 wherein the overlay is affixed to the front transparent electrode.

18. The lamp of claim 16 wherein the long-afterglow phosphor a decay time to 10% of its initial brightness of greater than 1 minute.

19. The lamp of claim 16 wherein the long-afterglow phosphor has a decay time to 5% of its initial brightness of greater than 60 minutes.

20. The lamp of claim 16 wherein the lamp provides a visible illumination of at least about 3 mcd/m² for at least about 10 minutes after power to the lamp has been turned off.

21. The lamp of claim 16 wherein the lamp provides a visible illumination of at least about 0.5 mcd/m² for at least about 60 minutes after power to the lamp has been turned off.

22. The lamp of claim 16 wherein the long-afterglow phosphor is represented by a formula MO. x(Al₂O₃):RE, where M is an alkaline earth metal and RE is at least one lanthanide element.

23. The lamp of claim 16 wherein the long-afterglow phosphor is SrAl₂O₄:Eu,Dy or Sr₄Al₁₄O₂₅:Eu,Dy.

24. An electroluminescent lamp including at least one layer containing an electroluminescent phosphor and at least one layer containing a long-afterglow phosphor, the electroluminescent phosphor emitting visible light when electric power is applied to the lamp and the long-afterglow phosphor emitting visible light for a time after the electric power to the lamp is turned off.

25. The lamp of claim 24 wherein the layer containing the long-afterglow phosphor is applied to a surface of a light-emitting side of the lamp.

26. The lamp of claim 24 wherein the electroluminescent phosphor and the long-afterglow phosphor are contained in the same layer.

27. The lamp of claim 25 wherein the lamp provides a visible illumination of at least about 3 mcd/m² for at least about 10 minutes after power to the lamp has been turned off.

28. The lamp of claim 25 wherein the lamp provides a visible illumination of at least about 0.5 mcd/m² for at least about 60 minutes after power to the lamp has been turned off.

29. The lamp of claim 25 wherein the long-afterglow phosphor is represented by a formula MO. x(Al₂O₃):RE, where M is an alkaline earth metal and RE is at least one lanthanide element.

30. The lamp of claim 25 wherein the long-afterglow phosphor is SrAl₂O₄:Eu,Dy or Sr₄Al₁₄O₂₅:Eu,Dy.

31. The lamp of claim 1 wherein the lamp forms a backlight for a keypad.

32. The lamp of claim 16 wherein the lamp forms a backlight for a keypad.

33. The lamp of claim 25 wherein the lamp forms a backlight for a keypad.

34. The lamp of claim 1 wherein the long-afterglow phosphor is represented by a formula MO. x(Al₂O₃):RE, where M is an alkaline earth metal and RE is at least one lanthanide element.

35. The lamp of claim 1 wherein the long-afterglow phosphor is SrAl₂O₄:Eu,Dy or Sr₄Al₁₄O₂₅:Eu,Dy.
